# EUROPEAN PATENT SPECIFICATION

(11) **EP 2 548 253 B1**
(45) Date of publication and mention of the grant of the patent: **17.08.2016**
(21) Application number: 11711215.1
(22) Date of filing: 18.03.2011
(51) Int. Cl.: H01M 4/86, H01M 4/88, H01M 4/92, H01M 8/16

(54) **MICROBIAL FUEL CELL PROCESS WHICH MAXIMIZES THE REDUCTION OF BIODEGRADABLE MATERIALS CONTAINED IN A FLUID STREAM**
MIKROBIELLES BRENNSTOFFZELLENVERFAHREN MIT MAXIMALER REDUZIERUNG VON BIOLOGISCH ABBAUBAREN STOFFEN IN EINEM FLÜSSIGKEITSSTROM
TRAITEMENT D'UNE PILE À COMBUSTIBLE MICROBIENNE OPTIMISANT LA RÉDUCTION DE MATÉRIAUX BIODÉGRADABLES PRÉSENTS DANS UN FLUX LIQUIDE

(30) Priority: 19.03.2010 US 315548 P
(43) Date of publication of application: 23.01.2013
(73) Proprietor: Dow Global Technologies LLC, Midland, MI 48674 (US)
(72) Inventor: WALLIN, Sten, A., CH-8942 Oberrieden (CH); MINERS, James, CH- 1268 Begnins (CH); GUO, Xiaoying, Midland MI 48642 (US)
(74) Representative: Beck Greener
(86) International application number: PCT/US2011/028971
(87) International publication number: WO 2011/116272

(56) References cited:
- WO-A1-01/04626
- KUMLANGHAN ET AL: "Microbial fuel cell-based biosensor for fast analysis of biodegradable organic matter", BIOSENSORS AND BIOELECTRONICS, ELSEVIER BV, NL, vol. 22, no. 12, 16 May 2007 (2007-05-16), pages 2939-2944, XP022080426, ISSN: 0956-5663, DOI: DOI:10.1016/J.BIOS.2006.12.014

## Description

### FIELD OF THE INVENTION

The present invention relates to systems and processes for maximizing the reduction of the concentration of biologically degradable materials in a fluid stream utilizing microbial fuel cells.

### BACKGROUND

Microbial fuel cells are well known. Patents disclosing and claiming processes for producing electricity in a combustion free environment and using microbial fuel cells to remove organic contaminants from water granted in the 1960's, see Davis et al. US 3,331,705; Davis et al. US 3,301,705 and Helmuth US 3,340,094. Generally, microbial fuel cells function by contacting a fluid containing a biodegradable material, such as a waste water stream, with microbes which catalyze the decomposition of biodegradable materials in the presence of an anode. The source of waste water streams may include streams from commercial or industrial processes or from water treatment plants. The microbes generate byproducts including electrons. The electrons are transferred from the microbe to the anode. The anode is in contact with a cathode by means of both an electron conduit and an ion conduit. The electrons are conducted by the electron conduit from the anode to the cathode. This is typically an external circuit. The electrons are driven from anode to cathode by the electrical potential difference (i.e. voltage) between the cathode and anode. With a suitable load placed in an external circuit, the electrical energy between the anode and the cathode a portion of the generated can be captured and used for other purposes. In order to maintain electroneutrality, the flow of electrons from anode to cathode must be accompanied by a flow of ions as well. Either cations will move from anode to cathode, or anions will move from cathode to anode, or both cations and anions will move between anode and cathode. The ions are conducted by an ion conduit. Ideally, the ion conduit is ionically conductive and electrically non-conductive. Typical fuel cells have common features including: an electron donor, the fuel, is oxidized at the anode, which is a conductive solid that accepts the electrons from the donor, in microbial fuel cells the fuel is biodegradable material; a catalyst is needed to carry out the oxidation at the anode, in microbial fuel cells bacteria function as the catalyst; the electrons move through an electrical conduit typically through an external conduit from the anode to the cathode, which is another conductive solid; at the cathode, the electrons are added to an electron acceptor, usually oxygen; and either cations, such as protons (H⁺), sodium ions (Na⁺), potassium ions (K⁺), move separately from the anode to the cathode or anions, such as hydroxide ions (OH⁻), chloride ions (Cl⁻) move from the cathode to the anode to maintain electroneutrality in the anode compartment. As electrons flow from the anode to the cathode through an external circuit, ions must also move between the anode and the cathode to maintain electrical neutrality. Failure to move the hydrogen ions from the anode compartment or hydroxide ions to the anode compartment can result in acidification of the anode compartment and a pH gradient between the compartments. The use of microbes or other biological catalysts in the anodic compartment of a microbial fuel cell normally requires a near neutral pH. The practical effect of the pH gradient is a drop in voltage efficiency, which consequently decreases power generation. WO 01/04626 discloses the use of microbial fuel cells as biosensors and discloses this phenomena. Rittmann et al WO 2010/008836 addresses this issue by adding carbon dioxide to the cathode compartment.

Microbial fuel cells provide the promise of environmentally friendly power generation and fluid purification and also present several technical challenges in addition to the pH gradient problem noted above. Waste water is a common fluid containing biodegradable material that can be purified using microbial fuel cells. Microbial fuel cells can be more costly to operate than standard water treatment processes.

What are needed are microbial fuel cells that address the above described problems in a manner such that microbial fuel cells can be utilized in commercial environment that can maximize the degradation of biodegradable materials and which minimize costs. What are needed are microbial fuel cell processes which do not require the use of a buffer in the system which minimize ohmic losses and mass transfer losses and which utilize environmentally friendly and efficient oxidation agents. What are needed are microbial fuel cells that can be operated in a flexible manner to maximize the degradation of biodegradable material in a fluid stream while utilizing current generated by the microbial fuel which is not needed for the degradation of biodegradable materials.

### SUMMARY OF THE INVENTION

The present invention relates to a process for operating a microbial fuel cell comprising an anode, a cathode, microbes in contact with the anode, a conduit for electrons connecting the anode to the cathode, a sensor for determining the concentration of biodegradable material in the fluid introduced into the microbial fuel cell, and an interface connected to the sensor that displays or interprets the results of the sensor. The process comprises the steps of: A) contacting the fluid containing biodegradable material with the anode in the presence of microbes; B) contacting the cathode with an oxygen containing gas; C) using the sensor to sense the level of biodegradable material in the fluid and displaying or interpreting the results of the sensor using the interface; D) adjusting the voltage of the cell based on the concentration of biodegradable material in the fluid in order to achieve the desired degradation; and E) removing the fluid from the location of the anode. In one embodiment, the electron conduit is contacted directly to the anode without any load being located between the anode and the cathode. In one preferred embodiment the conduit for electrons is connected to a source of current. In another embodiment the fuel cell is operated under conditions such that the voltage of the current applied to the fuel cell is from greater than 0 and 0.4 volts. Preferably the microbial fuel cell produces from greater than 0 kWh/kg chemical oxygen demand to 5 kWh/kg chemical oxygen demand.

In one embodiment, the interface is a display which displays the concentration of biodegradable material in the fluid contacted with the anode and the amount of current withdrawn from or added to the cathode is adjusted manually based on the display. In another embodiment, the interface is an automatic controller in contact with the electron conduit adapted to interpret the concentration of biodegradable material in the fluid contacted with the anode and to adjust the amount of current withdrawn from or added to the cathode based on the concentration. Preferably, the amount of current withdrawn from or added to the cathode is chosen to maximize the amount of biodegradable material decomposed in the fluid.

In another embodiment low amounts of current are added to the microbial fuel cell using a voltage of greater than 0 to 0.2 volts at a current density at 5 A/m² or greater.

It should be appreciated that the above referenced aspects and examples are non-limiting, as others exist within the present invention, as shown and described herein. The microbial fuel cells utilized in the process of the invention facilitate the use of fluids having a low conductivity in such fuel cells without the need for a buffer. The microbial fuel cells used in the process of the invention facilitate effective and efficient biodegradable material destruction. They can be set up to run in a flexible manner to maximize biodegradable material degradation and to utilize current generated in the fuel cells for other purposes when not needed for biodegradable material degradation. The microbial fuel cells used in the process of the invention with feed streams having low conductivity demonstrate high current densities such as 3 A/m² or greater, more preferably 7 A/m² or greater and most preferably 15 A/m² or greater.

### DESCRIPTION OF THE DRAWINGS

Figure 1 is an illustration of a microbial fuel cell.
Figure 2 is an illustration of the outside of a microbial fuel cell.
Figure 3 is a second embodiment of a microbial fuel cell.
Figure 4 is a third embodiment of a microbial fuel cell.
Figure 5 is a fourth embodiment of a microbial fuel cell.
Figure 6 is a three dimensional view of a sheet-like anode chamber in combination with a cathode and a separator.
Figure 7 shows the operating cell voltage and the anode potential (as a function of time for various applied cell voltages for the cell of Example 1.
Figure 8 shows the operating cell voltage and the anode potential as a function of time for various applied cell voltages for the cell of Example 2.
Figure 9 shows the cell voltage, anode potential vs. Ag/AgCl and the cathode potential vs. Ag/AgCl for the cell of Example 1.
Figure 10 shows the cell voltage, anode potential vs. Ag/AgCl and the cathode potential vs. Ag/AgCl for the cell of Example 2.

### DETAILED DESCRIPTION OF THE PREFERRED EMBODIMENT

The present invention is directed to a unique solution for efficient processes utilizing microbial fuel cells to remove biodegradable materials from fluids. Described herein are microbial fuel cells adapted to maximize the amount of biodegradable material degraded in the microbial fuel cells. In another embodiment, the microbial fuels cells can be operated to adjust the amount of current that is removed from the cell or added to the cell based on the level of biodegradable material in the feed to the cells. The invention relates to processes for operating microbial fuel cells to maximize the amount of biodegradable material degraded in a microbial fuel cell by adjusting the current removed or added to the cell during operation. In the embodiment where no current is removed or added to the microbial fuel cell no net electricity is produced or consumed. In this embodiment a simplified system is used which reduces complexity, e.g. does not require control electronics, and cost. The addition of current to the microbial fuel cells can reduce the size of the fuel cells and feed tanks utilized and thus the cost of the system and degradation of the biodegradable material. The microbial fuel cells used in the process of the invention can facilitate the handling of spikes in biodegradable material in the feed without the need for large cells and holding tanks.

As used herein the conductive means that the designated material enhances or facilitates the flow of designated matter therethrough, such as ions or electrons. Electrically conductive means the designated material enhances or facilitates the flow of electrons through the designated material. Ionically conductive means the designated material enhances or facilitates the flow of ions through the designated material.

The anode is adapted to be contacted with a fluid containing a biodegradable material. The anode can be placed in a container containing such fluids or can be contained in a chamber, an anode chamber. In the embodiment wherein the anode is disposed in an anode chamber, the anode chamber functions to contain the anode, the microbes and the fluid containing the biodegradable material. The anode chamber may be fabricated from any material that is compatible with the anode, the microbes and the fluid containing the biodegradable material. In a preferred embodiment, the anode chamber may be fabricated from a rigid plastic material. Preferred plastics from which the anode chamber may be fabricated include polyvinyl chlorides, polyolefins, acrylics, polycarbonates, styrenics and blends thereof including polycarbonate-ABS (acrylonitrile-butadiene-styrene blends). The anode chamber contains an inlet for introduction of fluids containing biodegradable materials and an outlet for the fluids. Where the microbial cell is functioning properly, the fluid exiting through the outlet has a lower concentration of biodegradable materials than the fluid fed to the anode chamber. The anode chamber may be of any shape or configuration which facilitates the contacting of the anode, the microbes and the fluid containing the biodegradable material. In a preferable embodiment the anode chamber is shaped so as to provide a housing for a bed of anode material and microbes that the fluid containing biodegradable material can flow through. The anode can be any shape which performs the function of collecting electrons generated as a result of the degradation of biodegradable material. The shape can be cylindrical, tubular, rectangular box, sheet-like and the like. Sheet-like as used herein means that the cathode resembles a three dimensional sheet having relatively large dimensions in one plane and a relatively small dimension in the direction perpendicular to the plane defined by the large dimensions, which can be referred to as the thickness. The shape of the sheet-like anode in the plane of the large dimensions can be any shape that allows the anode to function as described herein. The shape of the anode in the plane of the large dimensions can be irregular, trapezoidal, circular, oval, square, rectangular and the like. The shapes do not need to be precise in that the corners of trapezoids, squares and rectangles can be rounded and the angles do not need to be precise or 90 degrees. The edges of the sheet-like anode do not need to be square or at right angles and can be curved or partially curved. Edges as used herein are the sides of the sheet-like material along the small dimension. The size of the chamber is chosen to fit the anode shape and volume and the desired capacity of the microbial fuel cell, which an engineer skilled in the art can determine. In a preferred embodiment the anode chamber or the anode has the shape sheet-like material having a rectangular shape in the plane of the two large dimensions. Preferably, the dimension of the chamber or anode in the direction of the smallest dimension, that is the thickness of the anode, is 10 mm or less, more preferably 5 mm or less. Preferably such dimension, thickness, is 1 mm or greater.

The cathode is disposed to be in contact with an oxygen containing fluid. The cathode can be open to an environment containing an oxygen containing fluid, such as air, or it can be located in a cathode chamber. In one embodiment, the microbial fuel cell can be located in a container of fluid containing the biodegradable material, for instance the microbial cell can be immersed in such fluid. In this embodiment the cathode is disposed in a cathode chamber. The cathode chamber functions to contain the cathode and the oxygen containing fluid. The cathode chamber may be fabricated from any material that is compatible with the cathode and the oxygen containing fluid. In a preferred embodiment, the cathode chamber may be fabricated from a rigid plastic material as described with respect to the anode chamber. Preferably the cathode chamber is fabricated from the same material as the anode chamber. The cathode chamber may contain an inlet for introduction of oxygen containing fluid and/ or an outlet for the oxygen containing fluid.

Where oxygen containing fluid is flowed through the cathode chamber, the fluid exiting through the outlet has a lower concentration of oxygen than the fluid fed to the cathode chamber. The cathode chamber may be of any shape or configuration which facilitates the contacting of the cathode and the oxygen containing fluid. In another preferred embodiment, the cathode chamber allows for the diffusion of oxygen containing fluid into and out of the cathode chamber. The shape of the cathode or the cathode chamber can be any shape which allows the cathode to function as recited herein. Preferably the shape is any of the shapes described as preferable for the anode and the anode chamber. The size of the chamber is chosen to fit the desired capacity of the microbial fuel cell, which an engineer skilled in the art can determine.

Preferably, a portion of the anode chamber is open toward the cathode. Preferably, a portion of the cathode chamber is open toward the anode. Preferably the opening of the cathode chamber and the anode chamber match one another. In one preferred embodiment, the cathode chamber and anode chamber have matching openings which are adapted to mate and form a closed chamber. In one embodiment the two chambers are open to one another. Preferably a separator is disposed on the opening of the anode chamber or cathode chamber or between the openings of the anode chamber and the cathode chamber. The separator functions to electrically insulate between the anode and the cathode and allows the flow of ions between the cathode and the anode. Preferably, the separator also prevents the flow of microbes and biodegradable material from the anode to the cathode. Preferably, the separator limits or prevents the flow of gas or liquids between the anode and the cathode. Any separator that performs this function may be used. Preferred forms of separators include screens, cloth, films and membranes. Preferably, an ion exchange membrane is located on the opening of the anode chamber or cathode chamber or between the anode chamber and the cathode chamber at the opening of each. Preferably a seal is disposed about the edges of anode chamber, the cathode chamber or the matched openings of the cathode and the anode to inhibit, control or prevent transport of fluids in or out of the anode chamber, cathode chamber or fuel cell, or between the cathode and anode chambers. In one preferred embodiment, the screen, cloth, film or membrane disposed between the cathode and anode chambers also functions as a seal about the periphery of the junction of the two chambers.

The anode may comprise any known anode useful in microbial cells. Any material which is electrically conductive and is compatible with the microbes may be used. Compatible with the microbes means that the anode material does not kill the microbes or interfere with the microbes catalyzing the decomposition of the biodegradable material. In this embodiment preferably the anode is comprised of an electrically conductive material. Preferably, the electrically conductive material is an electrically conductive metal, or an electrically conductive carbon. A preferred electrically conductive metal is titanium. Any carbon which is electrically conductive may be used in this invention. Preferred classes of carbon include carbon black, graphite, graphene, graphite oxide and carbon nanotubes. Another preferred form of carbon comprises a matrix of expanded graphite having pores which pass through the carbon matrix. The electrically conductive material can be in any form which allows efficient contact between the microbes, the anode and the fluid containing biodegradable material and which forms electron flow passages to the electron conduit and through the circuit to the cathode. It is desired that the electrically conductive materials have as high a surface area as possible. The relevant surface area is the surface area available for contact with the fluid containing biodegradable material. In one embodiment the anode is a bed defined by the anode chamber filled with the electrically conductive material. The electrically conductive material can be in the form of a sheet, paper, cloth, interwoven fibers, random fibers, organized fibers, particles, beads, granules, pellets, agglomerated particles, foam, a monolith having pores communicating through the monolith, or any combination thereof. In preferred embodiment the electrically conductive materials comprise carbon cloth, carbon paper, carbon felt, carbon wool, carbon foam, graphite, porous graphite, graphite powder, graphite granules, graphite fiber, agglomerated conductive carbon black and reticulated vitreous carbon. In the embodiment wherein the electrically conductive material is in the form of particles or granules, such particles or granules are preferably of a size suitable for supporting bacteria disposed on the particles or granules. In one embodiment the electrically conductive material may be dispersed in a matrix such as a polymer compatible with the system, the matrix can be in the form of a film, bead, pellet and the like. Preferably the particle size is of a size such that the fluid containing biodegradable material can flow through the anode or anode bed without undue backpressure and such that the biodegradable material in the fluid is able to come into contact with the microbes. Preferably the particle size is 1 micron or greater and most preferably about 10 microns or greater. Monolith as used herein refers to a unitary structure having pores located through the structure that the fluid containing biodegradable material can flow through. The pores in the anode are preferably of a size such that the fluid containing biodegradable material can flow through the anode or anode bed without undue backpressure, the microbes can reside on the surface of the pores and such that the biodegradable material in the fluid is able to come into contact with the microbes. As used herein a bed of electrically conductive material means electrically conductive material of any shape or size contained in a confined space in a manner such that the fluid containing the biodegradable material can flow through the bed and contact a significant portion of the surface area of the electrically conductive material. Preferably the bed shape is as described hereinbefore with respect to the anode and the anode chamber. Preferably the surface area of the anode is 0.01 m²/g or greater, more preferably 0.1 m²/g or greater and most preferably 1.0 m²/g or greater. Organized fibers as used herein means that fibers are arranged in a designed shape such as in a brush shape as described in Logan et al US 2008/0292912. Typically, the anode provides a surface for attachment and growth of microbes and therefore the anode is made of material compatible with microbial growth and maintenance. Compatibility of a material with microbial growth and maintenance in a microbial fuel cell may be assessed using standard techniques such as assay with a viability marker such as Rhodamine 123, propidium iodide, and combinations of these or other bacteria viability markers.

The surface area of the anode included in embodiments of a microbial fuel cell used in the process according to the present invention is greater than 100 m²/m³. Specific surface area is here described as the surface area of the anode per unit of anode volume. Specific surface area greater than 100 m²/m³ contributes to power generation in microbial fuel cells utilized according to embodiments of the present invention. In further embodiments, the microbial fuel cells used in the process according to the present invention include an anode having a specific surface area greater than 1000 m²/m³. In still further embodiments, the microbial fuel cells used in the process according to the present invention include anodes having a specific surface area greater than 5,000 m²/m³. In yet further embodiments fuel cells used in the process according to the present invention include anodes having a specific surface area greater than 10,000 m²/m³. An anode configured to have a high specific surface area allows for scaling of a microbial fuel cell used in the process according to the present invention.

In one preferred embodiment the anode comprises a mixture of one or more electrically conductive materials and one or more ionically conductive materials. Preferred ionically conductive materials are ion exchange materials. The mixture is arranged such that electron flow paths and ion flow paths are created through the anode. The electrically conductive materials create a flow path of electrons to the electron conduit and through a circuit to the cathode. The ionically conductive materials create a flow path of ions, preferably hydrogen ions to the cathode chamber or hydroxide ions from the cathode chamber. The respective materials need to be present in sufficient amount and in a suitable arrangement so as to form the desired flow paths. The arrangement can be akin to interpenetrating networks. Alternatively one of the materials, preferably the ionically conductive materials, can be disposed in layers or continuous strips through the anode chamber wherein the layers or strips are in contact with the cathode chamber or ion exchange membrane or electron conduit. In a preferred embodiment a blend of particles of both materials is utilized such that the desired flow paths are present. Preferably, an anode of conductive material and ionically conductive material comprises 30 volume percent or greater of electrically conductive material based on the solid material present, more preferably 40 volume percent or greater and most preferably 45 volume percent or greater. Preferably an anode of electrically conductive material and ionically conductive exchange material comprises 70 volume percent or less of electrically conductive material based on the solid material present, more preferably 60 volume percent or less and most preferably 55 volume percent or less. Preferably an anode of electrically conductive material and ionically conductive material comprises 30 volume percent or greater of ionically conductive material based on the solid material, more preferably 40 volume percent or greater and most preferably 45 volume percent or greater. Preferably, an anode of electrically conductive material and ionically conductive material comprises 70 volume percent or less of ionically conductive material based on the solid material, more preferably 60 volume percent or less and most preferably 55 volume percent or less. "Based on the solid material" means that the volume of pores and spaces between particles is not included in the recited volume.

Preferably, the anode comprises spaces around particles in the anode and/or pores in the material used to form the anode. The fluid containing biodegradable material flows through the anode by flowing around the particles or through the pores. The spaces between the particles and size of the pores need to be of a size such that the microbes can reside on the surface of the particles or the pores, the biodegradable material can contact the microbes and such that as the fluid flows through the anode. In essence the anode is preferably constructed to provide flow paths for the fluid containing biodegradable material in a so that it is capable of contacting the anode and the microbes present in the anode. The spaces between the particles are best described and the percent of void space, space not occupied by solid material, preferably the void space is 20 percent by volume or greater, more preferably 33 volume percent or greater, more preferably 50 volume percent by weight or greater. Preferably the void space is 96 percent by weight or less. The corollary is that the solid volume is 80 volume percent or less, more preferably 67 volume percent or less and more preferably 50 volume percent or less. Preferably the solid volume is 4 volume percent or greater. The median spaces or pore size are preferably 5 microns or greater and more preferably 10 microns or greater. The median spaces or pore size are preferably 1000 microns or less and more preferably 100 microns or less. In another embodiment, the anode and/or the cathode chambers have inlets and or outlets to facilitate flow through the cathode and or anode chambers.

The microbial fuel cells used in the process of the invention preferably comprise a means for introducing fluid material to the anode. Preferably, the fluid flows through the anode in a direction substantially parallel to one of the faces of the ion exchange membrane. Such means can be any means which introduces a fluid to the anode in the designated flow path. In one preferred embodiment such means includes one or more of an inlet and an outlet arranged such the flow of fluid through the anode. Preferably the fluid flow is substantially parallel to one face of the separator. In another embodiment a means of creating flow of the fluid such as a blower or impeller and the like are utilized to force fluid in the desired direction with respect to the anode. Substantially parallel means that the flow of fluid is generally parallel to the separator but the angle of the vector of flow is not precise. Where the anode is in a sheet-like shape the flow of fluid is preferably perpendicular to the thickness dimension of the anode. Preferably, the flow of fluid through the anode is perpendicular to the thickness dimension of the anode and substantially parallel to one face of the separator.

The cathode may comprise any known cathode useful in microbial cells. The cathode comprises an electrically conductive material which is capable of transmitting electrons. The electrically conductive material can be any electrically conductive material described as useful for the anode. In a preferred embodiment the cathode further comprises a catalyst for the oxidation reduction reactions. Preferred classes of catalysts are Group VIII metals and oxidase enzymes. Preferred metals are the noble metals, with platinum and palladium more preferred. The catalyst can be located on the cathode or where the cathode is disposed in a chamber it may be in any location in the cathode chamber. Preferably, the catalyst is located on the surface of the cathode. In the embodiment wherein the catalyst is a metal, the catalyst concentration is chosen such that the oxidation reduction reaction in the cathode chamber proceeds at a reasonable rate. Preferably the catalyst is present in an amount of 0.10 mg of metal per square centimeter of projected cathode surface area or less, more preferably 0.05 mg of metal per square centimeter of projected cathode surface area or less and most preferably 0.02 mg of metal per square centimeter of projected cathode surface area or less. Preferably the catalyst is present in an amount of 0.001 mg of metal per square centimeter of projected cathode surface area or greater, more preferably 0.005 mg of metal per square centimeter of projected cathode surface area or greater, even more preferably 0.01 mg of metal per square centimeter of projected cathode surface area or greater and most preferably 0.015 mg of metal per square centimeter of projected cathode surface area or greater. The cathode is preferably a solid material with a large surface area.

In one preferred embodiment the cathode comprises a mixture of one or more electrically conductive materials and one or more ionically conductive materials. Preferred ionically conductive materials are ion exchange materials. The electrically conductive materials may further comprise a catalyst as described hereinbefore. Preferably, the catalyst is coated onto the surface of the conductive material, for instance carbon. The mixture is arranged such that electron flow paths and ion flow paths are created through the cathode. The electrically conductive materials create a flow path of electrons in the cathode. The ionically conductive materials create a flow path of ions, preferably hydrogen ions from the anode chamber or hydroxide ions from the cathode chamber. The respective materials need to be present in sufficient amount and in a suitable arrangement so as to form the desired flow paths. The arrangement can be akin to interpenetrating networks. Preferably one of the materials, preferably the ionically conductive materials, can be disposed in layers or continuous strips through the cathode chamber wherein the layers or strips are in contact with the anode chamber or ion exchange membrane or electron conduit. In a preferred embodiment a blend of particles of both materials is utilized such that the desired flow paths are present. These flow paths allow the oxygen containing fluid to flow through the cathode. Preferably, a cathode of conductive material and ionically conductive material comprises 30 volume percent or greater of electrically conductive material based on the solid material present, more preferably 40 volume percent or greater and most preferably 45 volume percent or greater. Preferably a cathode of electrically conductive material and ionically conductive exchange material comprises 70 volume percent or less of electrically conductive material based on the solid material present, more preferably 60 volume percent or less and most preferably 55 volume percent or less. Preferably a cathode of electrically conductive material and ionically conductive material comprises 30 volume percent or greater of ionically conductive material based on the solid material, more preferably 40 volume percent or greater and most preferably 45 volume percent or greater. Preferably, a cathode of electrically conductive material and ionically conductive material comprises 70 volume percent or less of ionically conductive material based on the solid material, more preferably 60 volume percent or less and most preferably 55 volume percent or less. "Based on the solid material" means that the volume of pores and spaces between particles is not included in the recited volume.

Preferably, the cathode comprises spaces around particles in the cathode and/or pores in the material used to form the cathode. The oxygen containing fluid flows through the cathode by flowing around the particles or through the pores. The spaces between the particles and size of the pores need to be of a size such that the oxygen containing fluid freely flows through the cathode. The median (by volume fraction) spaces or pore size are preferably 5 nanometers or greater and more preferably 10 nanometers or greater. The median spaces or pore size are preferably 100 microns or less and more preferably 10 microns or less. This is best described and the percent of void space, space not occupied by solid material, preferably the void space is 20 percent by volume or greater, more preferably 33 volume percent or greater, more preferably 50 volume percent by weight or greater. Preferably the void space is 96 percent by weight or less. The corollary is that the solid volume is 80 volume percent or less, more preferably 67 volume percent or less and more preferably 50 volume percent or less. Preferably the solid volume is 4 volume percent or greater. In another embodiment, the anode and/or the cathode chambers have inlets and or outlets to facilitate flow through the cathode and or anode chambers.

The anode chamber and/or the cathode chamber may have a separator, barrier, located on the opening thereof. Where both the cathode and the anode are located in chambers they that may have a separator, barrier, located therebetween. The separator functions to separate the anode from the cathode. The separator preferably is nonconductive, that is does not allow electrons to pass through the separator. The separator preferably allows ions to pass through the separator. Preferably the separator inhibits the flow of fluids, such as water and oxygen containing gases, therethrough. The separator preferably functions to prevent solids from flowing out of or between the chambers. The separator preferably allows ions to pass between the chambers so as to balance the pH in the two chambers. The separator can be a cloth, screen, film or an ion exchange membrane. In a preferred embodiment the ion exchange membrane is an anion exchange membrane. The ion exchange membrane can be heterogeneous, homogeneous, supported or unsupported. The ion exchange membrane needs to be biocompatible, that is not harm the biological materials in the system. In one preferred embodiment the ion exchange membrane is a film prepared from a blend of ion exchange resins and a binder. The ion exchange resins may be subjected to an operation to reduce the particle size prior to contacting with the binder. The anion exchange membranes can contain any cationic moiety which facilitates the transfer of anions from the cathode to the anode. Preferred cationic moieties in the anionic exchange membrane are nitrogen containing cationic groups and preferably cationic ammonium ions, quaternary ammonium ions, imidazolium ions, pyridinium ions, and the like. The membrane allows transport of a desired material through the membrane. In preferred embodiments, the membrane prevents microbes of a size of 1000 nanometers from passing through the membrane. Thus, the flow of water and/or microbes through the membrane and any included membrane coatings is restricted. Microfiltration, nanofiltration and ion exchange membrane compositions are known in the art and any of various membranes may be used which exclude microbes and allow diffusion of a desired fluid (gas) through the membrane. Illustrative examples of microfiltration, nanofiltration and/or ion exchange membrane compositions include, but are not limited to, halogenated compounds such as tetrafluoroethylene, tetrafluoroethylene copolymers, tetrafluoroethylene-perfluoroalkylvinylether copolymers, polyvinylidene fluoride, polyvinylidene fluoride copolymers, polyvinyl chloride, polyvinyl chloride copolymers; polyolefins such as polyethylene, polypropylene and polybutene; polyamides such as nylons; sulfones such as polysulfones and polyether sulfones; nitrile-based polymers such as acrylonitriles; and styrene-based polymers such as polystyrenes. Examples of suitable membrane materials are ultrafiltration and nanofiltration membranes commonly employed in the water treatment industry to filter water while excluding bacteria. For example, a suitable membrane is ultrafiltration membrane B 0125 made by X-Flow, The Netherlands. Additional examples include CMI and AMI ion exchange membranes made by Membranes International, Inc. New Jersey, USA.

The separator is preferably a sheet having two opposing faces. In one preferred embodiment, the cathode is disposed adjacent to the separator. More preferably, the cathode is located adjacent to and in contact with one face of the separator. In one embodiment, the cathode is coated onto or printed on one face of the separator. In another embodiment the anode is located adjacent to the separator. More preferably the anode is located adjacent to and in contact with one face of the separator. Preferably the anode and the cathode are each adjacent to and in contact with opposing faces of the separator.

In one embodiment, a coating of nanoparticles of catalyst on the surface of fine particles of carbon may be place on a separator. The particle size of the fine particles of carbon may be any size which facilitates the particles being coated onto the separator. Preferably the fine carbon particles have a size of 1 nanometer or greater and more preferably 2 nanometers or greater. Preferably the fine carbon particles have a size of 50 microns or less and more preferably 10 microns or less. The catalyst nanoparticles are of size that allows them to be supported on the fine carbon particles. Preferably the catalyst nanoparticles have a size of 1 nanometer or greater. The fine carbon particles with nanoparticles of catalyst can be coated onto any separator known in the art, including those disclosed hereinbefore. Preferably the catalyst nanoparticles have a size of 100 nanometers or less and more preferably 50 nanometers or less. Preferably the fine carbon particles with nanoparticles of catalyst are coated onto an ion exchange membrane. In a preferred embodiment, the fine carbon particles with nanoparticles of catalyst are mixed with ion exchange resin when coated onto the separator. The particle size of the ion exchange resin is preferably from 100 nanometers to 100 microns. In coating the separator with the fine carbon particles with nanoparticles of catalyst and optionally the ion exchange resins, the particles and optionally the resin are dissolved or dispersed in a volatile solvent and applied to the separator. Preferred solvents are volatile organic solvents, such as alcohols ketones and aliphatic or aromatic hydrocarbons. Generally the coating is applied by contacting the solution of the catalyst containing particles with the substrate and allowing the solvent to volatilize away. Preferably the substrate, such as an ion exchange membrane, is swollen before applying the solution of the catalyst containing particles.

In the vicinity of the anode, located in the anode chamber where one is used, are microbes which are electrogenic, that is produce electrons when degrading biodegradable materials. The microbes are preferably found on the surface of the anode. Preferably they colonize on and live on the surface of the anode. Microbes as used herein include bacteria, archaea, fungi and yeast. Preferred microbes are anodophilic bacteria. The terms "anodophiles" and "anodophilic bacteria" as used herein refer to bacteria that transfer electrons to an electrode, either directly or by endogenously produced mediators. Often, anodophiles are obligate or facultative anaerobes. The term "exoelectrogens" is also used to describe suitable bacteria. Examples of anodophilic bacteria include bacteria selected from the families Aeromonadaceae, Alteromonadaceae, Clostridiaceae, Comamonadaceae, Desulfuromonaceae, Enterobacteriaceae, Geobacteraceae, Pasturellaceae, and Pseudomonadaceae. These and other examples of bacteria suitable for use in an inventive system are described in Bond, D. R., et al., Science 295, 483-485, 2002; Bond, D. R. et al., Appl. Environ. Microbiol. 69, 1548-1555, 2003; Rabaey, K., et al., Biotechnol. Lett. 25, 1531-1535, 2003; U.S. Pat. No. 5,976,719; Kim, H. J., et al., Enzyme Microbiol. Tech. 30, 145-152, 2002; Park, H. S., et al., Anaerobe 7, 297-306, 2001; Chauduri, S. K., et al., Nat. Biotechnol., 21:1229-1232, 2003; Park, D. H. et al., Appl. Microbiol. Biotechnol., 59:58-61, 2002; Kim, N. et al., Biotechnol. Bioeng., 70:109-114, 2000; Park, D. H. et al., Appl. Environ. Microbiol., 66, 1292-1297, 2000; Pham, C. A. et al., Enzyme Microb. Technol., 30: 145-152, 2003; and Logan, B. E., et al., Trends Microbiol. 14(12):512-518. Anodophilic bacteria preferably are in contact with an anode for direct transfer of electrons to the anode. However, in the case of anodophilic bacteria which transfer electrons through a mediator, the bacteria may be present elsewhere in the reactor and still function to produce electrons useful in an inventive process. Anodophilic bacteria may be provided as a purified culture, enriched in anodophilic bacteria, or even enriched in a specified species of bacteria, if desired. Pure culture tests have reported Coulombic efficiencies as high as 98.6% in Bond, D. R. et al., Appl. Environ. Microbiol. 69, 1548-1555, 2003. Thus, the use of selected strains may increase overall electron recovery and hydrogen production, especially where such systems can be used under sterile conditions. Bacteria can be selected or genetically engineered that can increase Coulombic efficiencies and potentials generated at the anode. Further, a mixed population of microbes may be utilized, including anodophilic anaerobes and other bacteria.

The feed to the microbial cell comprises a biodegradable material in a fluid. A biodegradable material included in a microbial fuel cell used in a process according to embodiments of the present invention is oxidizable by anodophilic bacteria or biodegradable to produce a material oxidizable by anodophilic bacteria. The term "biodegradable" as used herein refers to an organic material decomposed by biological mechanisms illustratively including microbial action, heat and dissolution. Microbial action includes hydrolysis, for example. The fluid is preferably a liquid, more preferably water or an organic liquid, with water more preferred. Any of various types of biodegradable organic matter may be used as "fuel" for microbes in amicrobial fuel cell, including fatty acids, sugars, alcohols, carbohydrates, amino acids, fats, lipids and proteins, as well as animal, human, municipal, agricultural and industrial wastewaters. Naturally occurring and/or synthetic polymers illustratively including carbohydrates such as chitin and cellulose, and biodegradable plastics such as biodegradable aliphatic polyesters, biodegradable aliphatic-aromatic polyesters, biodegradable polyurethanes and biodegradable polyvinyl alcohols. Specific examples of biodegradable plastics include polyhydroxyalkanoates, polyhydroxybutyrate, polyhydroxyhexanoate, polyhydroxyvalerate, polyglycolic acid, polylactic acid, polycaprolactone, polybutylene succinate, polybutylene succinate adipate, polyethylene succinate, aliphatic-aromatic copolyesters, polyethylene terephthalate, polybutylene adipate/terephthalate and polymethylene adipate/terephthalate. Organic materials oxidizable by anodophilic bacteria are known in the art. Illustrative examples of an organic material oxidizable by anodophilic bacteria include, but are not limited to, monosaccharides, disaccharides, amino acids, straight chain or branched C₁-C₇ compounds including, but not limited to, alcohols and volatile fatty acids. In addition, organic materials oxidizable by anodophilic bacteria include aromatic compounds such as toluene, phenol, cresol, benzoic acid, benzyl alcohol and benzaldehyde. Further organic materials oxidizable by anodophilic bacteria are described in Lovely, D. R. et al., Applied and Environmental Microbiology 56:1858-1864, 1990. In addition, a provided material may be provided in a form which is oxidizable by anodophilic bacteria or biodegradable to produce an organic material oxidizable by anodophilic bacteria. Specific examples of organic materials oxidizable by anodophilic bacteria include glycerol, glucose, acetate, butyrate, ethanol, cysteine and combinations of any of these or other oxidizable organic substances.

In a preferred embodiment, the biodegradable material in a fluid is a waste stream containing biodegradabale material. The fluid for the waste stream can be organic or aqueous. The waste stream can be a waste stream from a chemical or biological process or a waste water stream. The waste water stream can come from a chemical or biological process, a municipal waste water stream or a contaminated water source.

An electron transfer mediator which functions to enhance the transfer of electrons to the anode may be located in the vicinity of the anode, for instance in the anode chamber. Any compound known in the art to perform this function may be utilized in the microbial fuel cells. Preferred mediators are exemplified by ferric oxides, neutral red, anthraquinone-1,6-disulfonic acid (ADQS) and 1,4-napthoquinone (NQ). Examples of other known mediators include phenazine methosulfate, 2,6-dichlorophenol indophenol, thionine, toluidine, potassium ferricyanate and 1,4-naphthoquinone. Mediators are optionally chemically bound to the anode, or the anode modified by various treatments, such as coating, to contain one or more mediators.

The biodegradeable material in the fluid in many known microbial fuel cell processes exhibit low conductivity. The low conductivity inhibits the flow of ions between the anode and the cathode. To address this problem many known processes add buffers to the fluid containing the biodegradable material. Common buffers contain phosphates. In embodiments wherein the effluent from the microbial cells is a purified waste stream, the presence of phosphates or certain other buffers is undesirable. In one embodiment of the invention a buffer which is environmentally friendly may be added, for instance a carbonate or source of carbonate such as carbon dioxide. In a more preferred embodiment, the microbial fuel cell is operated using an unbuffered feed. The unbuffered feed can be fed directly to the fuel cell or an electrolyte can be added. Generally, the conductivity of the feed is 10 millisiemens/cm or less, even 5 millisiemens/cm or less and even 2 milliesiemens/cm or less. Generally, the conductivity of the feed is 0.5 millisiemens/cm or greater and even 0.9 millisiemens/cm or greater.

The cathode is contacted with an oxygen containing fluid. Oxygen is reduced in vicinity of the cathode to form water or hydroxide ions, such as in a cathode chamber. Any fluid containing oxygen may be contacted with the cathode. Air is preferred for cost reasons. Pure oxygen or an oxygen enriched stream may be used. In a preferred embodiment, a flow of oxygen containing fluid to the cathode may be utilized. In such embodiment, a blower may be used to contact the oxygen containing fluid with the cathode. A preferred fluid containing oxygen is a gas.

An electron conduit connects the anode and the cathode and functions to flow electrons between the anode and cathode. The electron conduit may flow through an external circuit, external to the microbial fuel cell, or may form an internal circuit, completely within the microbial fuel cell. The electron conduit can be any material or shape which performs the recited function. Preferably the electron conduit is comprised of an electrically conductive metal, preferable electrically conductive metals include copper, silver, gold or iron or alloys containing such metals, with copper or steel being most preferred. Preferably, the electron conduit is in a wire or sheet form, and most preferably a wire form. As in conventional microbial fuel cells, the electron conduit may connect the cell to an electrical load. Load used herein means a device or element that consumes the electrical energy from the microbial fuel cell. The load can be a resistor, where the electrical energy from the microbial fuel cell is converted into thermal energy (heat); or a motor, where the electrical energy from the microbial fuel cell is converted into mechanical energy (work). The load can be isolated from the microbial fuel cell by on one or more electronic circuits such as a voltage inverter, a power grid, etc. In one preferred embodiment, the load is an electrical device which a portion of the current generated can power. In another embodiment, the load can be a battery adapted to store the generated electricity or a power grid to distribute the electricity for use. In another embodiment the electron conduit can be in contact with a source of electrical current. The current provided by the source of current is used by the cell in increase the amount of biodegradable material degraded in the microbial fuel cell. Any source of current known in the art may be used in this embodiment including sources of direct and alternating current; the power grid, generators, batteries and fuel cells. In one embodiment the electron conduit is directly connected from the anode to cathode. Directly connected means that the electron conduit in not connected to a load or a source of current. The electron conduit can be routed outside of and back into the microbial fuel cell or it can be completely located within the fuel cell. Where there is a direct connection between the anode and the cathode, the cell is short circuited in that the electrons flow directly from the anode to the cathode. The electron conduit directly connected from the anode to the cathode may pass through a current controller adapted to adjust the amount of current flowing from the anode to the cathode. This current controller can be used to adjust the amount of current flowing to the cathode and into the microbial fuel cell. This allows the current to be adjusted to match the amount of current needed to degrade the amount of biodegradable material in the fluid introduced into the fuel cell. Any known device for controlling current that can withstand the environment of the microbial fuel cells may be utilized, including variable resistors, current controlling electronic load, and the like. In embodiments wherein a load and/or a source of current are connected to the electron conduit, a current controller can be further connected to the electron conduit. The current controller can be operated to adjust the amount of current introduced to the microbial fuel cell and/or the amount of current removed from the cell. The microbial fuel cells may further comprise a sensor that determines the amount of biodegradable material contained in the feed to the anode chamber of the microbial fuel cell. Any sensor known in the art to determine the concentration of biodegradable material may be used in this invention. The microbial fuel cell may further contain an interface, that interprets or displays the results of the sensor. Preferably the interface is a display or an electronic controller. In one preferred embodiment the interface is an electronic controller, such as a computer or microchip, adapted to adjust the amount of current removed or added to the fuel cell based on the concentration of biodegradable material in the fluid introduced to the microbial fuel cell. In one embodiment the interface can be a display that shows the concentration of biodegradable material in the feed to the anode. An operator can manually adjust the current taken from or added to the microbial fuel cell based on the concentration.

The microbial fuel cells used in the process of the invention may further comprise one or more current collectors, which form part of the electron conduit. The current collector may be the electron conduit or may be one part of the electron conductor. A current collector functions to collect current from an electrode (cathode or anode) and deliver it to the electrical circuit. Preferred current collectors comprise a conductive metal. The current collector is preferably adjacent to and in intimate contact with an electrode. Current collectors may be of any shape that allows them to be adjacent to or in contact with an electrode. Preferably the current collector is a wire, screen or sheet of metal shaped to contact a significant portion of an electrode.

One or more regulator devices, such as valves, may be included to further regulate flow of materials into and out of an anode or cathode chamber. Further, one or more caps or seals are optionally used to close a channel used to introduce a fluid into an anode chamber or a cathode chamber. For example, where a fuel cell is operated remotely or as a single use device such that no additional materials are added, one or more caps or seals are optionally used to close a channel. One or more pumps may be provided for enhancing flow of liquid or gas into and/or out of a reaction chamber.

The microbial fuel cells utilized in the process of the invention may be assembled by placing the anode, and optionally the electron mediators, in contact with a separator or in an anode chamber. The cathode, and optionally the current collector, is placed in contact with a separator or in a cathode chamber. A seal and/or a separator (barrier material) is placed about or on the opening of an anode or cathode chamber. Where both the anode and cathode are placed in chambers, the cathode chamber and the anode chamber are brought into contact along their respective mating surfaces with the seal and/or the separator, barrier material, such as an anion exchange membrane, located therebetween. The anode and cathode chambers are held in place by any known means, such as through the use of mechanical fasteners or adhesives. Mechanical fasteners, such as screws, are preferred to facilitate disassembly of the microbial fuel cell to repair or clean the cell. Inlet and outlet fluid conduits may be attached to the anode and cathode inlets and outlets. Such conduits are further connected to sources of feed material for the anode chamber, biodegradable material in a fluid, and for the cathode chamber, oxygen containing gas. If desired, the cell through the electron conduit may be connected to a load, a source of electricity, a sensor, a current controller and/or an interface. Initially the anode chamber needs to be innoculated with the bacteria. This is performed by adding the microbes or a medium containing the microbes to the anode, such as to the anode chamber, and exposing the anode to conditions such that a healthy colony of the microbes is resident in on or near the anode. The details of this process are well known to the skilled artisan. Once the innoculation is complete the microbial fuel cell can be operated to produce electricity and to remove biodegradable material from a fluid stream.

The particular components present in the microbial fuel cells used in the process of the invention determine the particular mode or modes of operation of the microbial fuel cell. In operation current can be removed from the cell, introduced to the cell or short circuited for use in the cell. With the appropriate components the amount of current removed and added can be adjusted to maximize the amount of biodegradable material degraded by the system. In the embodiment wherein the electron conduit directly connects the anode and the cathode the electrons may flow from the anode to the cathode. If an electron controller is disposed between the anode and the cathode the voltage of the current flowing to the cathode can be adjusted. Where the electron controller is a variable resistor the diverted electrons are converted to heat. In the embodiment wherein current is added to the microbial fuel cell, the current can be introduced by connecting the electron conduit to a source of current as described hereinbefore. The amount of current can be adjusted to match the level of biodegradable material in the feed to the microbial fuel cells. Where there is a sensor to sense the level of biodegradable material in the feed, the results can be fed to an interface which displays the result or which interprets the results and automatically adjusts the current level removed and/or added to the microbial fuel cell. Where the interface is a display, an operator can adjust the current removed or added based on the display. If the interface is an electronic controller, such as a computer or microchip, the electronic controller can be programmed to adjust the level of the current added or removed to maximize the amount of biodegradable material degraded in the microbial fuel cell.

One or more fuel cells can be used to generate electricity and/or reduce the amount of biodegradable material in a fluid. In operation a fluid containing biodegradable material is contacted with the anode while the cathode is exposed to an oxygen containing fluid. The oxygen containing fluid can be introduced into the cathode chamber by opening the chamber to the environment. Alternatively, air or an oxygen enriched, higher oxygen content, fluid can be flowed into contact with the cathode, such as by blowing an oxygen containing fluid over or toward the cathode. In one embodiment, the fluid containing biodegradable material is introduced into the anode chamber and the fluid having a lower biodegradable material content is the effluent from the anode chamber. The current inserted into or drawn from the microbial fuel cell is chosen to maximize the degradation of the biodegradable material. If the objective is to maximize the electrical power generated by the cell the current draw from the cell is such that the cell operating voltage is preferably 0.2 volts or greater and preferably 0.4 volts or less. If the objective is to maximize degradation of biodegradable material, the current drawn from the microbial fuel cell is such that the cell operating voltage is preferably 0.05 volts or greater and 0.2 volts or less. In the embodiment wherein current is added to the microbial fuel cells, an amount of current that achieves the desired reduction in biodegradable material may be used. The upper limit on the amount of current is practicality, that is the point at which the cost of degradation of the biodegradable material becomes greater than other processes. Preferably the microbial fuel cells are operated under conditions such that the voltage of the current applied to the fuel cell is greater than 0 volts. Preferably the microbial fuel cells are operated under conditions such that the voltage of the current applied to the fuel cell is 0.4 volts or less and more preferably 0.2 volts or less. The cell operating voltage is the voltage produced by an individual cell under operating conditions. The cell voltage demand is the voltage added to the microbial fuel cell to achieve the desired degradation of biodegradable material. If a plurality of cells are connected in electrical series to form a stack, then the cell operating voltage or cell voltage demand is taken to mean to average cell operating voltage or average cell voltage demand of the plurality of cells comprising the stack. The electron conduit may be connected to a load so as to transfer the current to the load such as a battery, a device to be powered or to a power grid. The electron conduit may be connected to a current source so as to transfer the current to the microbial fuel cell. Two or more microbial fuel cells may be hydraulically connected in a series fashion such that the effluent from the anode chamber may be flowed into the anode inlet for another chamber. The cells may be connected in parallel arrangement or in a combination of both series and parallel fashion. The effluent from the cathode chamber may be flowed into the inlet for the cathode chamber of another cell. Where a number of cells are connected in series additional oxygen containing gas may need to be introduced in one or more downstream modules to keep the oxygen content of the oxygen containing fluid at a level such that the cells operate efficiently. A number of microbial cells may be connected to the same load so as to provide the current the load needs to function.

In the embodiment wherein low amounts of current are added to the cell the voltage of the cell is selected to maximize the degradation of biodegradable material. Generally, the voltage is from greater than 0 to 2.0 volts or less. Preferably this is achieved at a current density of 5 A/m²or greater, more preferably 8 A/m²or greater and most preferably 10 A/m²or greater wherein the fluid feed to the anode chamber exhibits a conductivity of 1 millisiemen/cm or less. Preferably this is achieved at a current density of 10 A/m²or greater, more preferably 16 A/m²or greater and most preferably 20 A/m²or greater wherein the fluid feed to the anode chamber exhibits a conductivity of about 2 millisiemens/cm or less. Preferably this is achieved at a current density of 20 A/m²or greater, more preferably 32 A/m²or greater and most preferably 40 A/m²or greater wherein the fluid feed to the anode chamber exhibits a conductivity of 4 millisiemen/cm or less.

In the embodiment wherein the biodegradable fluid is a waste stream, the waste stream is passed may be passed through a number of microbial fuel cells until a sufficient amount of the biodegradable material in the waste stream has been removed to achieve a desired specified level of biodegradable material. Alternatively the effluent from the anode chamber can be recycled through the same cell, or same series of cells, until the desired specified level of biodegradable material is removed. In waste stream processing, a level of biodegradable material in the effluent is typically specified. The specified level of biodegradable material can be defined by a number of known measures, including chemical oxygen demand and biological oxygen demand. Once the desired level of biodegradable material is reached the fluid can be discharged, recycled for use in a process or subjected to other treatment.

An aqueous medium in a reaction chamber of a microbial fuel cell is formulated to be non-toxic to microbes in contact with the aqueous medium in the fuel cell. Further, the medium or solvent may be adjusted to be compatible with microbial metabolism, for instance by adjusting the pH to be in the range from 4 to 10, preferably 6 to 9, inclusive, by adjusting the pH with an acid or base, adding a buffer to the medium or solvent if necessary, by adjusting the osmolarity of the medium or solvent by dilution or addition of an osmotically active substance, or any combination thereof. Ionic strength may be adjusted by dilution or addition of a salt for instance. Further, nutrients, cofactors, vitamins and other such additives may be included to maintain a healthy bacterial population, if desired, see for example examples of such additives described in Lovley and Phillips, Appl. Environ. Microbiol. 54(6):1472-1480. Optionally, an aqueous medium in contact with microbes contains a dissolved biodegradable material oxidizable by the microbes. In operation, reaction conditions include variable such as pH, temperature, osmolarity, and ionic strength of the medium in the reactor. Reaction temperatures are typically in the range of 10-40° C for non-thermophilic microbes, although the device may be used at any temperature in the range of 0 to 100° C by including suitable microbes for growing at selected temperatures. However, maintaining a reaction temperature above ambient temperature may require energy input and it is preferred to maintain the reactor temperature at 15 to 30° C without input of energy.

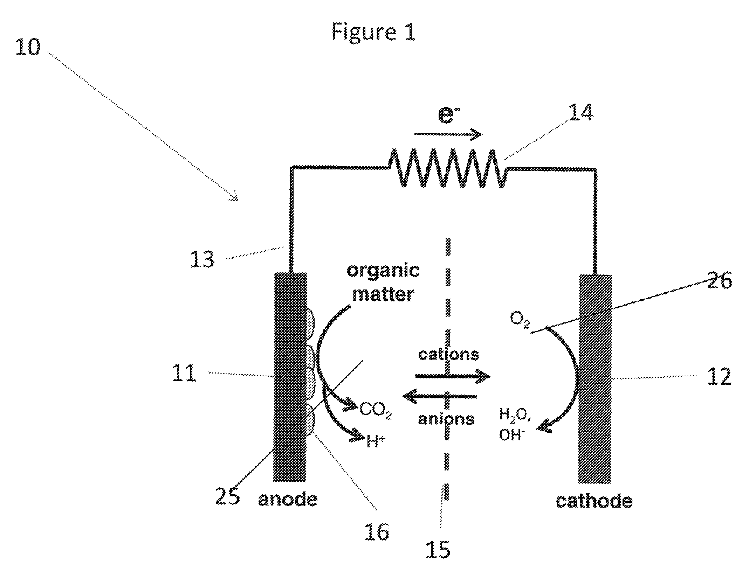

Figure 1 shows a schematic of a microbial fuel cell 10 used in the process of the invention. The figure shows an anode 11 with microbes 16 disposed on the anode 11. Also shown is a cathode 12 wherein the anode 11 and cathode 12 are separated by a separator 15. Connected to the anode 11 and the cathode 12 is an electron conduit 13 with a one or more of a load, current source, interface and a sensor 14 located between the anode 11 and cathode 12. The figure shows cations being transported from the anode chamber 25 to the cathode chamber 26 and anions transported from the cathode chamber 26 to the anode chamber 25. The figure also shows that organic matter is decomposed to carbon dioxide and hydrogen ions in the anode chamber 25 and to water and hydroxide ions in the cathode chamber 26.

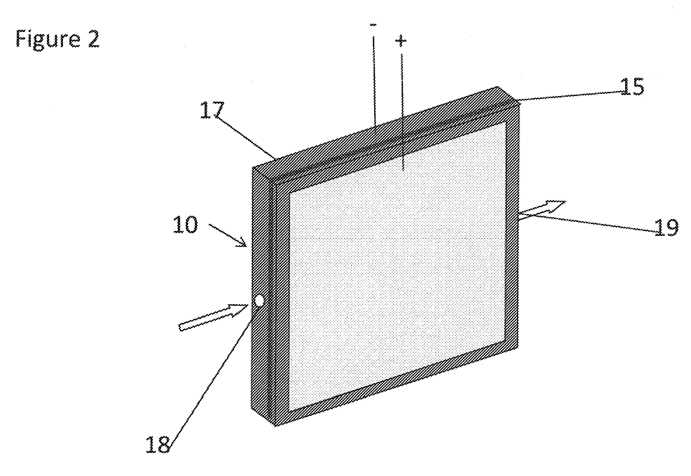

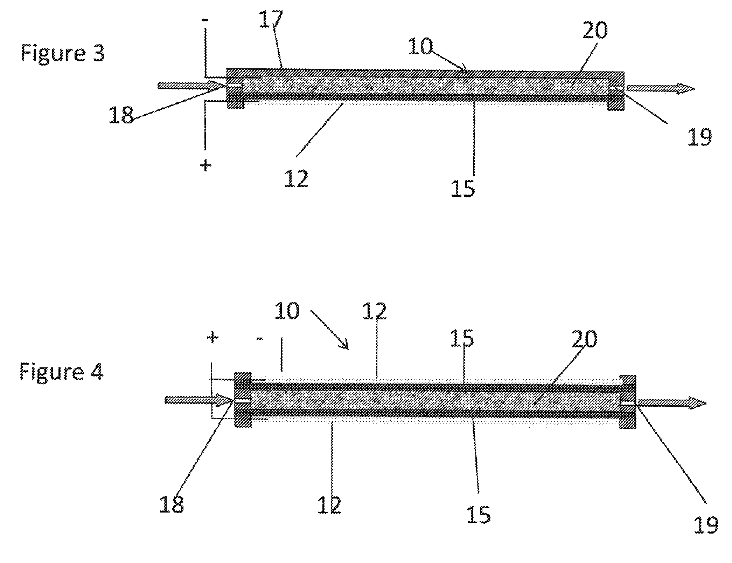

Figure 2 shows the exterior of a microbial fuel cell 10. Shown are the housing 17, the separator 15, the fluid containing biodegradable material outlet 19 and the fluid containing biodegradable material inlet 18. Figure 3 shows a simple microbial fuel cell used in the process of the invention 10 having a housing 17 anode bed 20, a cathode 12 and a separator 15. The anode bed 20 and the cathode 12 are disposed on opposing faces of the separator 15. Also shown are the biodegradable material containing fluid inlet 18 and the biodegradable material containing fluid outlet 19. The flow of biodegradable material containing fluid is shown as being parallel to the plane of the separator 15. The cathode 12 is open to air. The anode bed 20 functions as an anode chamber.

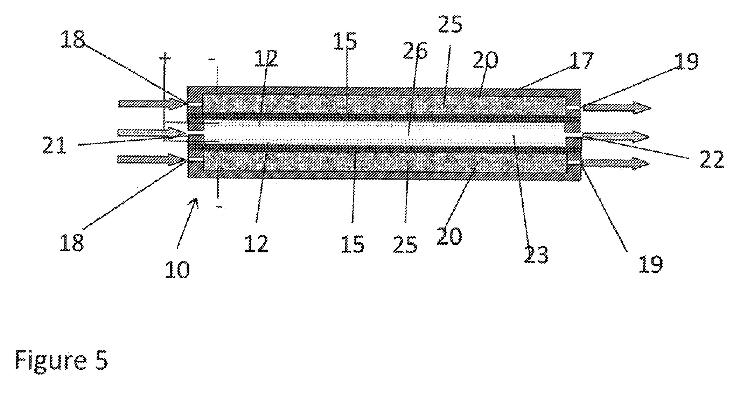

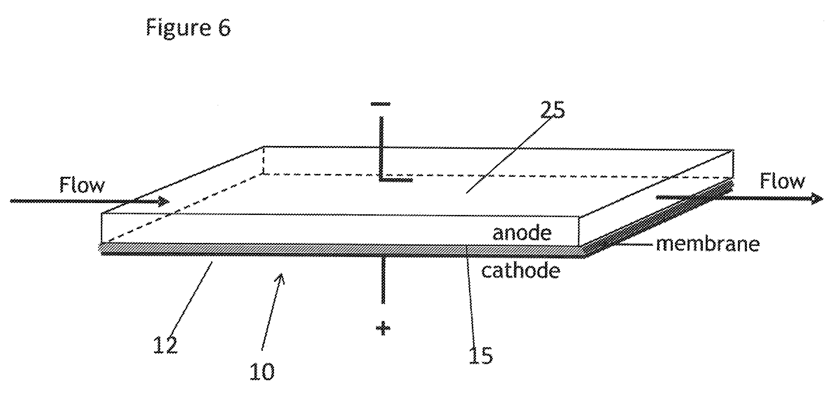

Figure 4 shows another embodiment of an microbial fuel cell 10 which contains two cathodes 12 each disposed on one face of two separators 15 wherein each separator 15 is in contact with the one anode bed 20. Shown are the biodegradable material containing fluid inlet 18 and the biodegradable material containing fluid outlet 19. The flow of biodegradable material containing fluid is shown as being parallel to the plane of the separators 15. The cathodes 12 are open to the air. Figure 5 shows another embodiment of an microbial fuel cell 10 which contains two cathodes 12 each disposed on one face of two separators 15 wherein each separator 15 is in contact with one of two anode beds 20. The cathodes 12 are disposed inside of the separators 15 and form a cathode chamber 26. At each end of the cathode chamber 26 are an air inlet 21 and an air outlet 22, respectively. Show are the biodegradable material containing fluid inlets 18 and the biodegradable material containing fluid outlets 19 for each anode chamber 25. The flow of biodegradable material containing fluid is shown as being parallel to the plane of the separators 15. Figure 6 shows a 3 dimensional illustration of a sheet-like anode chamber. Also shown is a cathode 12 and a separator 15 wherein the cathode 12 and the anode chamber 25 are disposed on opposing faces of the separator.

The following examples illustrate assembly of microbial fuel cells and operation of the microbial fuel cells. Unless otherwise stated, all parts and percentages are by weight.

### Example 1 (not according to the invention)

A microbial fuel cell comprising a carbon felt anode, an anion exchange membrane and a cathode consisting of Pt/C on carbon paper support is assembled as follows. A chamber 1.5 cm wide, about 4 cm long and 0.45 cm deep is machined in a 5 cm x 6.4 cm x 2.5 cm piece Lucite. Ports are drilled into the piece to serve as inlet and outlet ports for solution flow. A small hole drilled in the bottom of the chamber is used to connect a current collecting lead wire. The lead wire is sealed into place using epoxy. The anode is placed in the chamber. An anion exchange membrane, a film prepared from a polyolefin binder and ground anion exchange resin is placed over the felt (available from Zhejiang Qianqiu Environmental Water Treatment Co., Ltd., China). Then a cathode consisting of Pt/C on carbon paper support (ETEK GDE, 0.5 mg Pt/cm² of projected area) is cut to 1.5 cm x 3 cm and placed on the membrane opposite the carbon felt anode. The cathode is then covered with a Stainless Steel screen as the current collector (with holes to accommodate the cell bolts). Expanded graphite worms (available from Superior Graphite, Chicago, IL) are added between the cathode and the Stainless Steel screen to improve the conductivity. A second half-cell piece is then used to bolt the assembly together. Air diffuses through the inlet and outlet holes of the second half-cell piece to the cathode.

### Example 2 (not according to the invention)

A microbial fuel cell comprising a carbon felt anode, an anion exchange membrane and a composite cathode consisting of Pt/C and anion exchanger applied as ink to one side of the anion exchange membrane is assembled as follows. A platinum on carbon (Pt/C) cathode of MFCs is prepared as follows: An anion exchange membrane (available from Zhejiang Qianqiu Environmental Water Treatment Co., Ltd., China) is soaked in deinoized (DI) water for 24 hrs and cut into small sheets 3 cm by 6 cm to fit the cell body. The membrane is then masked to open an area (∼ 6 cm²) in the center for cathode coating. The catalyst ink is prepared by mixing 50 mg of 10%, Pt on Vulcan XC-72 (available from Fuel Cell Store, San Diego, CA), 50 mg of grinded DOWEX MARATHON™ 11 strong base anion exchange resin (available from Sigma-Aldrich, St. Louis, MO), and 5 milliliters (mL) isopropanol. The mixture is sonicated in DI water for 10 minutes and mixed in SpeedMixer (FlaxkTech Inc., Landrum, SC) with 3000 rpm for 3 minutes. A thin coating of the catalyst ink is applied directly to the surface of the masked membrane by placing certain amount of the ink on the surface of the membrane. In order to minimize the amount of catalyst ink that run off of the masked membrane, less than 0.5 mL of the ink is put down to the membrane with surface area ∼ 6 cm² during each coating. The blank membrane is painted once to obtain a Pt loading of about 0.03 mg Pt/cm² of projected area. The ink can be applied without fully drying between coats. The coated membrane is then allowed to completely dry in the air for several hours. A chamber 1.5 cm wide, about 4 cm long and 0.45 cm deep is machined in a 5 cm x 6.4 cm x 2.5 cm piece Lucite. Ports are drilled into the piece to serve as inlet and outlet ports for solution flow. A small hole drilled in the bottom of the chamber is used to connect a current collecting lead wire. The lead wire is sealed into place using epoxy. The anode is placed in the chamber. The anion exchange membrane with Pt/C ink cathode is placed over the felt so that the cathode is on the side of the membrane opposite the carbon felt anode. The cathode is then covered with a Stainless Steel screen as the current collector (with holes to accommodate the cell bolts). Expanded graphite worms (available from Superior Graphite, Chicago, IL) are added between the cathode and the Stainless Steel screen to improve the conductivity. A second half-cell piece is then used to bolt the assembly together. Air diffuses through the inlet and outlet holes of the second half-cell piece to the cathode.

### Operation of the Microbial Fuel Cells

The cells are placed into a flow system that recirculates a feed solution from a reservoir through the cell. The feed solution consists of 5 mM acetate, 5 mM bicarbonate, 1 mM NH₄Cl, pH = 8.6, conductivity = 1 mS/cm, The feed solution is inoculated using activated sludge and extracted soils. The cells are initially operated with a resistor as the load in the external circuit connecting the anode and the cathode. As the microbes adapt and grow on the anode, the resistor can be changed to draw larger currents from the MFC. After several weeks of operation at increasing current, the cells were operating at nearly short circuit. At this point, the load resistor was replaced with a potentiostat which allows the cells to be operated at negative cell voltage.

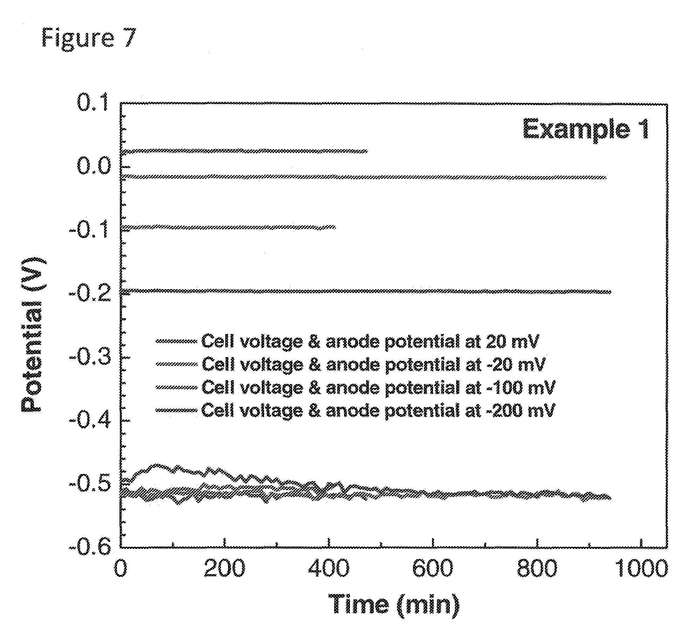

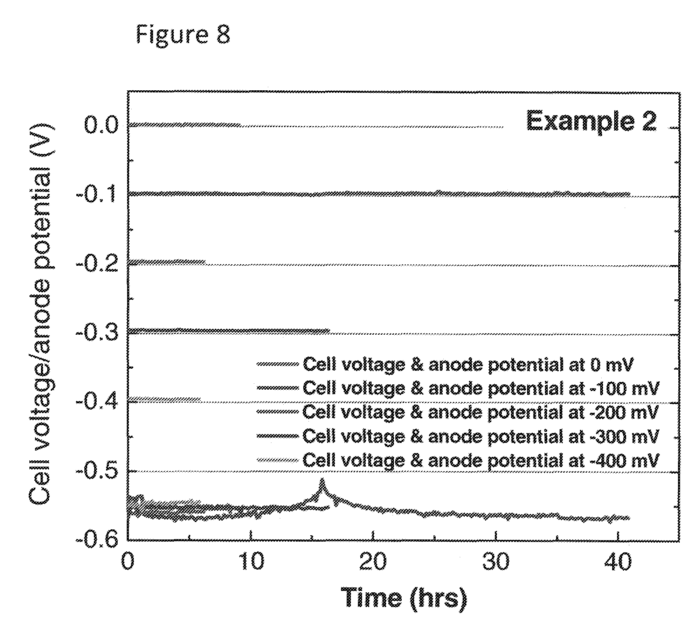

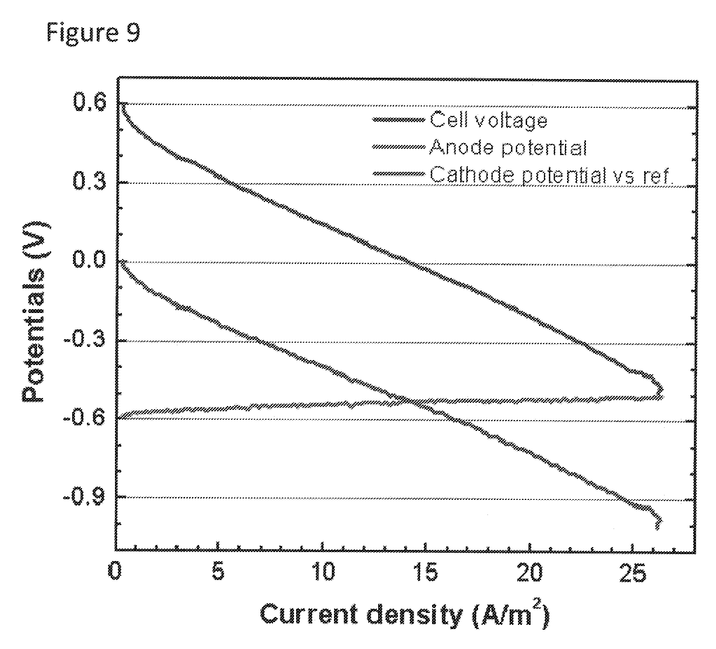

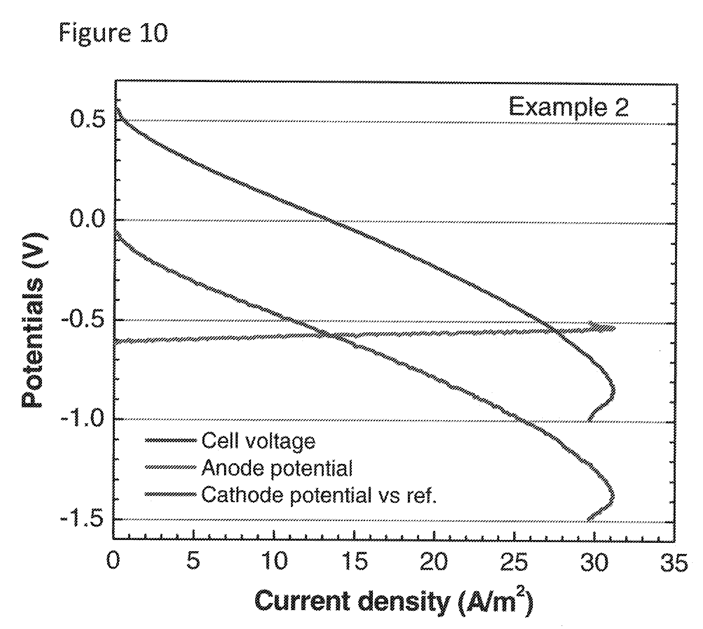

The cells exhibited sustainable operation at cell voltages between 0.020V and -0.400 V under potentiostatic operation with anode potentials about -0.5 V vs. Ag/AgCl. Figure 7 shows the operating cell voltage and the anode potential (vs. Ag/AgCl reference electrode) as a function of time for various applied cell voltages for the cell of Example 1. Figure 8 shows the operating cell voltage and the anode potential (vs. Ag/AgCl reference electrode) as a function of time for various applied cell voltages for the cell of Example 2. The current-voltage response of the microbial fuel cells are measured by linear sweep voltammetry. Figure 9 shows the cell voltage, anode potential vs. Ag/AgCl and the cathode potential vs. Ag/AgCl for the cell of Example 1. Figure 10 shows the cell voltage, anode potential vs. Ag/AgCl and the cathode potential vs. Ag/AgCl for the cell of Example 2.

## Claims

1. : A process for operating a microbial fuel cell comprising
an anode,
a cathode,
microbes in contact with the anode,
a conduit for electrons connecting the anode to the cathode,
a sensor for determining the concentration of biodegradable material in the fluid introduced into the microbial fuel cell, and
an interface connected to the sensor that displays or interprets the results of the sensor;
wherein the process comprises the steps of:
A) contacting the fluid containing biodegradable material with the anode in the presence of microbes;
B) contacting the cathode with an oxygen containing fluid;
C) using the sensor to sense the level of biodegradable material in the fluid and displaying or interpreting the results of the sensor using the interface;
D) adjusting the voltage of the cell based on the concentration of biodegradable material in the fluid in order to achieve the desired degradation of biodegradable material;
E) removing the fluid from the location of the anode.

2. : A process according to Claim 1 wherein the electron conduit is connected directly to the anode and the cathode.

3. : A process according to Claim 2 wherein there is no load between the anode and the cathode.

4. : A process according to Claim 1 wherein the electron conduit further comprises a variable resistor located between the anode and the cathode.

5. : A process according to Claim 1 wherein the conduit for electrons is connected to a source of current.

6. : A process according to Claim 5 wherein the interface comprises a display of the concentration of biodegradable material in the fluid fed to the microbial fuel cell as determined by the sensor.

7. : A process according to Claim 6 wherein the interface comprises an electronic controller adapted to adjust the level of current added to the microbial fuel cell based on the concentration of biodegradable material in the fluid fed to the microbial fuel cell as determined by the sensor.

8. : A process according to Claim 1 wherein the interface is a display which displays the concentration of biodegradable material in the fluid contacted with the anode and the amount of current withdrawn from or added to the cathode is adjusted manually based on the display.

9. : A process according to Claim 1 wherein the interface is an automatic controller adapted to interpret the concentration of biodegradable material in the fluid contacted with the anode and to adjust the amount of current withdrawn from or added to the cathode based on the concentration, wherein the controller is in contact with the electron conduit.

10. : A process according to Claim 1 wherein low amounts of current are added to the microbial fuel cell using a voltage of greater than 0 to 2.0 volts.

11. : A process according to Claim 1 wherein the voltage of the current applied to the microbial fuel cell is greater than 0 volts.

## Patentansprüche

1. Ein Verfahren zum Betreiben einer mikrobiellen Brennstoffzelle, beinhaltend:
eine Anode,
eine Kathode,
Mikroorganismen in Kontakt mit der Anode,
eine Leitung für Elektronen, die die Anode mit der Kathode verbindet,
einen Sensor zum Bestimmen der Konzentration biologisch abbaubaren Materials in dem in die mikrobielle Brennstoffzelle eingeführten Fluid und
eine mit dem Sensor verbundene Schnittstelle, die die Ergebnisse des Sensors anzeigt oder interpretiert;
wobei das Verfahren die folgenden Schritte beinhaltet:
A) In-Kontakt-Bringen des biologisch abbaubares Material enthaltenden Fluids mit der Anode in Gegenwart von Mikroorganismen;
B) In-Kontakt-Bringen der Kathode mit einem sauerstoffhaltigen Fluid;
C) Verwenden des Sensors zum Erfassen des Pegels an biologisch abbaubarem Material in dem Fluid und Anzeigen oder Interpretieren der Ergebnisse des Sensors unter Verwendung der Schnittstelle;
D) Einstellen der Spannung der Zelle auf der Basis der Konzentration biologisch abbaubaren Materials in dem Fluid, um die gewünschte Zersetzung des biologisch abbaubaren Materials zu erzielen;
E) Entfernen des Fluids von dem Standort der Anode.

2. Verfahren gemäß Anspruch 1, wobei die Elektronenleitung direkt mit der Anode und der Kathode verbunden ist.

3. Verfahren gemäß Anspruch 2, wobei zwischen der Anode und der Kathode keine Last anliegt.

4. Verfahren gemäß Anspruch 1, wobei die Elektronenleitung ferner einen verstellbaren Widerstand beinhaltet, der sich zwischen der Anode und der Kathode befindet.

5. Verfahren gemäß Anspruch 1, wobei die Leitung für Elektronen mit einer Stromquelle verbunden ist.

6. Verfahren gemäß Anspruch 5, wobei die Schnittstelle eine Anzeige der Konzentration biologisch abbaubaren Materials in dem Fluid, das in die mikrobielle Brennstoffzelle eingespeist wird, wie durch den Sensor bestimmt, beinhaltet.

7. Verfahren gemäß Anspruch 6, wobei die Schnittstelle eine elektronische Steuereinheit beinhaltet, die angepasst ist, um den Pegel des der mikrobiellen Brennstoffzelle zugeführten Stroms auf der Basis der Konzentration biologisch abbaubaren Materials in dem Fluid, das in die mikrobielle Brennstoffzelle eingespeist wird, wie durch den Sensor bestimmt, einzustellen.

8. Verfahren gemäß Anspruch 1, wobei die Schnittstelle eine Anzeige ist, die die Konzentration biologisch abbaubaren Materials in dem mit der Anode in Kontakt gebrachten Fluid anzeigt, und der Betrag des aus der Kathode entnommenen oder der Kathode zugeführten Stroms manuell auf der Basis der Anzeige eingestellt wird.

9. Verfahren gemäß Anspruch 1, wobei die Schnittstelle eine automatische Steuereinheit ist, die angepasst ist, um die Konzentration biologisch abbaubaren Materials in dem mit der Anode in Kontakt gebrachten Fluid zu interpretieren und den Betrag des aus der Kathode entnommenen oder der Kathode zugeführten Stroms auf der Basis der Konzentration einzustellen, wobei sich die Steuereinheit in Kontakt mit der Elektronenleitung befindet.

10. Verfahren gemäß Anspruch 1, wobei der mikrobiellen Brennstoffzelle unter Verwendung einer Spannung von mehr als 0 bis 2,0 Volt geringe Strombeträge zugeführt werden.

11. Verfahren gemäß Anspruch 1, wobei die Spannung des an die mikrobielle Brennstoffzelle angelegten Stroms mehr als 0 Volt beträgt.

## Revendications

1. Un procédé pour le fonctionnement d'une pile à combustible microbienne comprenant
une anode,
une cathode,
des microbes en contact avec l'anode,
un conduit pour électrons connectant l'anode à la cathode,
un capteur pour déterminer la concentration de matière biodégradable dans le fluide introduit dans la pile à combustible microbienne, et
une interface connectée au capteur qui affiche ou interprète les résultats du capteur ; où le procédé comprend les étapes consistant :
A) à mettre le fluide contenant de la matière biodégradable en contact avec l'anode en présence de microbes ;
B) à mettre la cathode en contact avec un fluide contenant de l'oxygène ;
C) à utiliser le capteur pour capter le niveau de matière biodégradable dans le fluide et à afficher ou interpréter les résultats du capteur en utilisant l'interface ;
D) à ajuster la tension de la pile sur la base de la concentration de matière biodégradable dans le fluide afin de parvenir à la dégradation de matière biodégradable souhaitée ;
E) à enlever le fluide de l'endroit où se situe l'anode.

2. Un procédé selon la revendication 1 où le conduit pour électrons est connecté directement à l'anode et à la cathode.

3. Un procédé selon la revendication 2 où il n'y a pas de charge entre l'anode et la cathode.

4. Un procédé selon la revendication 1 où le conduit pour électrons comprend en sus une résistance variable située entre l'anode et la cathode.

5. Un procédé selon la revendication 1 où le conduit pour électrons est connecté à une source de courant.

6. Un procédé selon la revendication 5 où l'interface comprend un afficheur de la concentration de matière biodégradable dans le fluide alimentant la pile à combustible microbienne telle que déterminée par le capteur.

7. Un procédé selon la revendication 6 où l'interface comprend un contrôleur électronique conçu pour ajuster le niveau de courant ajouté à la pile à combustible microbienne sur la base de la concentration de matière biodégradable dans le fluide alimentant la pile à combustible microbienne telle que déterminée par le capteur.

8. Un procédé selon la revendication 1 où l'interface est un afficheur qui affiche la concentration de matière biodégradable dans le fluide mis en contact avec l'anode et la quantité de courant retirée de ou ajoutée à la cathode est ajustée manuellement sur la base de l'affichage.

9. Un procédé selon la revendication 1 où l'interface est un contrôleur automatique conçu pour interpréter la concentration de matière biodégradable dans le fluide mis en contact avec l'anode et pour ajuster la quantité de courant retirée de ou ajoutée à la cathode sur la base de la concentration, le contrôleur étant en contact avec le conduit pour électrons.

10. Un procédé selon la revendication 1 où de faibles quantités de courant sont ajoutées à la pile à combustible microbienne en utilisant une tension de plus de 0 à 2,0 volts.

11. Un procédé selon la revendication 1 où la tension du courant appliqué à la pile à combustible microbienne est supérieure à 0 volt.
